# EUROPÄISCHE PATENTSCHRIFT

(11) **EP 1 593 041 B1**
(45) Veröffentlichungstag und Bekanntmachung des Hinweises auf die Patenterteilung: **17.10.2012**
(21) Anmeldenummer: 03778246.3
(22) Anmeldetag: 04.11.2003
(51) Int. Cl.: G06F 9/50

(54) **RECHNERSYSTEM IN EINEM FAHRZEUG**
COMPUTER SYSTEM FOR USE IN VEHICLES
SYSTEME D'ORDINATEURS MONTE DANS UN VEHICULE

(30) Priorität: 31.01.2003 DE 10304114
(43) Veröffentlichungstag der Anmeldung: 09.11.2005
(73) Patentinhaber: ROBERT BOSCH GMBH, 70442 Stuttgart (DE)
(72) Erfinder: BARKOWSKI, Andre, 38228 Salzgitter (DE); SIEPEN, Peter, 31137 Hildesheim (DE); MLASKO, Torsten, 31141 Hildesheim (DE); BAIERL, Wolfgang, 73630 Remshalden (DE); WESTENDORF, Andreas, 31137 Hildesheim (DE)
(86) Internationale Anmeldenummer: PCT/DE2003/003646
(87) Internationale Veröffentlichungsnummer: WO 2004/068344

(56) Entgegenhaltungen:
- EP-A- 0 514 972
- EP-A- 1 000 810
- EP-A- 1 259 032
- WO-A-99/48021
- WO-A-99/64952

## Beschreibung

### Stand der Technik

Die Erfindung betrifft ein Rechnersystem in einem Fahrzeug.

Die heutigen Systeme im Fahrzeug, beispielsweise Navigationssysteme oder Entertainmentsysteme, sind oftmals unabhängig voneinander oder auf die eine oder andere Art abhängig voneinander. So können einzelne Prozessoren für Navigationsaufgaben, für die Darstellung des Mensch-Maschine-Interfaces, für Fahrzeug- und Klimasteuerung, etc. vorgesehen sein. Bei der Aufteilung eines komplexen Systems auf verschiedene Prozessoren mit exakt umschriebenen Aufgaben ist dabei eine sehr genaue Trennung mit sehr genau definierten Schnittstelle notwendig. Dadurch entstehen Ausfallrisiken bzw. Probleme bei gegensätzlichen Anweisungen in den verschiedenen Systembereichen. Übernimmt dagegen ein Prozessor mehrere Aufgaben, so muss dieser Prozessor entweder auf die gleichzeitige Durchführung aller Aufgaben ausgelegt werden oder sind bei hohen Belastungen des Prozessors Leistungseinbrüche in Kauf zu nehmen.
Die WO 99/48021 A zeigt ein Computersystem für Kraftfahrzeuge, bei welchem sicherheitsrelevante Funktionen und Multimediaanwendungen auf zwei Prozessorbaugruppen aufgeteilt sind. Diese Baugruppen weisen jeweils Mikroprozessoren auf. Darüber hinaus ist eine dritte Baugruppe vorgesehen, welche mit den beiden Prozessorbaugruppen verbunden ist, und die je nach Ausgestaltung einen mehr oder weniger mächtigen Grafikprozessor umfasst. Die Kommunikation zwischen diesen drei Baugruppen verläuft über einen gemeinsamen Speicher. Die beiden Prozessorbaugruppen kommunizieren demnach mit einer Grafikbaugruppe, haben auf einen gemeinsamen Grafkspeicher Zugriff, so dass für den Fall, dass sowohl im Rahmen der sicherheitsrelevanten Anwendungen als auch im Rahmen der Multimediaanwendungen Grafiken eine Rolle spielen, diese offensichtlich von einem einzigen Grafikprozessor für beide Anwendungen berechnet werden.
Die EP-A-1000810 beschreibt ein Rechnersystem, welches aus einer ersten Rechnereinheit, welche die Funktionen fahrzeugspezifischer Einrichtungen steuert, einer zweiten Rechnereinheit, welche Programme zur Steuerung kundenspezifischer Einrichtungen ausführt, einer gemeinsamen Bedieneinheit zum Eingeben von Informationen und einer Ausgabeeinrichtung zum Ausgeben von Informationen besteht.
Die EP-A-1259032 zeigt ein System zur Steuerung von elektrisch ansteuerbaren Komponenten in einem Kraftfahrzeug mit einer Zentralsteuereinhek, in der mindestens ein erstes Modul zur Ansteuerung von Kraftfahrzeugkomponenten fest integriert ist und in das mindestens ein zweites Modul aufnehmbar ist, wobei das zweite Modul zur Steuerung von Infotainmentkomponenten oder zur Steuerung von Multimediakomponenten ausgebildet ist.

### Vorteile der Erfindung

Die Aufteilung von Aufgaben bzw. Funktionen auf wenigstens zwei Rechner nach Eigenschaften der Aufgabe bzw. der Funktion, wobei einer im Wesentlichen fahr- bzw. fahrzeugbezogene Aufgaben bzw. Funktionen (Fahrzeugsystem oder Fahrerinformationssystem), der andere im Wesentlichen nicht fahrbezogene bzw. nicht fahrzeugbezogene Aufgaben / Funktionen (Unterhaltungssysteme) durchführt, hat den Vorteil, dass eine getrennte Betrachtung von Fahrzeugsystemen /Fahrerinformationssystemen und Entertainmentsystemen ermöglicht wird. Dies erlaubt vor allem die Ausgestaltung des Entertainmentsystems als offenes, des Fahrzeugsystems als geschlossenes System. Dadurch wird in vorteilhaftes Weise trotz der offenen Architektur des Entertainmentsystem (z.B. Internetanbindung, Softwaredownload) die Sicherheit des Fahrzeugsystems gewährleistet. Unter einem offenen System wird hier ein System verstanden, welches zur Kommunikation mit der Außenwelt eingerichtet ist und beispielsweise auch Änderungen der eigenen Software bzw. Konfiguration durch den Benutzer erlaubt, während ein geschlossenes System diese Möglichkeiten nicht eröffnet.

Besonders vorteilhaft bei einer solchen Aufteilung ist die Skalierbarkeit des Systems im Hinblick auf verschiedene Ausstattungsgrade des gesamten Rechnersystems und der Teilsysteme. Es werden unterschiedliche Ausstattungsgrade des Systems ermöglicht, ohne dass umfangreiche Änderungen des Systems erforderlich sind. So kann eine alleinige Fahrzeugsteuerung (Klimasteuerung und Fahrerwarnsysteme), eine erweiterte Fahrzeugssteuerung (zusätzlich Navigation, Radio, etc.) und eine high-end Ausstattung (zusätzlich Entertainment, Information, etc.) durch Erweiterungen des Rechnerssytems mit weiteren Hardware-Komponenten (plus der erforderlichen Software) erreicht werden.

Ferner wird in vorteilhafter Weise eine Unabhängigkeit von Innovationszyklen erreicht, da das nicht fahrbezogene System als offenes System gestaltet ist und somit Innovationszyklen schnell folgen kann, während das fahrbezogene System, welches geringeren Innovationszyklen unterworfen ist, an diesen Veränderungen nicht teilnimmt. Dies gilt nicht nur für die Software, sondern auch für die ständig leistungsfähiger werdenden Bauteile der Consumer-Elektronik, die durch das offene System des Entertainmentteils austauschbar ist.

Ferner ist die Verfügbarkeit der Teilsysteme im Fahrzeug unabhängig voneinander, so dass für fahrzeugrelevante Informationen, die immer präzise verfügbar sein müssen (beispielsweise Navigationshinweise, Fahrerwarnungen, etc.) die Verfügbarkeit sichergestellt ist, da unterhaltungsrelevante Informationen (z.B. eine Videowiedergabe) nicht den fahrbezogenen Teil belasten.

Ferner ist von besonderem Vorteil, dass der fahrzeugseitige Bus oder die fahrzeugsseitigen Bussysteme immer am gleichen Teilsystem angebunden sind, unabhängig davon, welche zusätzliche Ausstattung insbesondere bezüglich des Entertainments vorgesehen ist.

Ferner trägt die dargestellte Lösung der Aufteilung zu einer Minimierung des Risikos bei, da die fahrbezogenen Systeme getrennt sind von den Entertainmentsystemen, die beispielsweise durch den Download von neuen Funktionen, fehlerbehaftet sein können. Ebenso wird dadurch bezüglich des fahrbezogenen Teils eine Vorhersagbarkeit des Systemsverhaltens sichergestellt.

Weitere Vorteile ergeben sich aus der nachfolgenden Beschreibung von Ausführungsbeispielen bzw. aus den abhängigen Patentansprüchen.

### Zeichnung

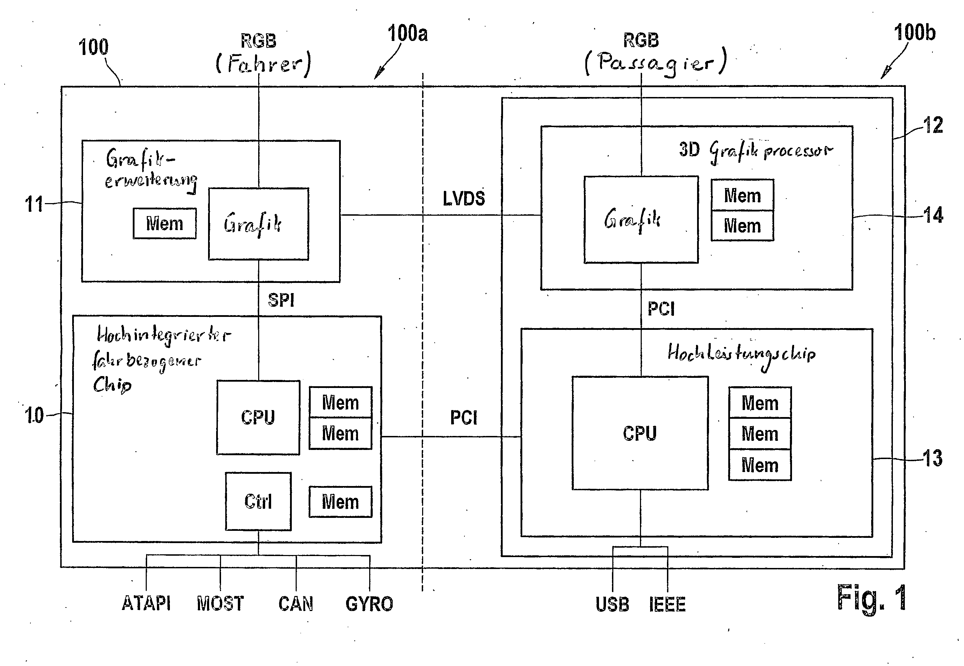

Die Erfindung ist nachfolgend anhand der in der Zeichnung dargestellten Ausführungsformen verdeutlicht. Die einzige Figur zeigt ein Beispiel für ein Rechnersystem, bei welchem fahrbezogene Aufgaben und nicht fahrbezogene Aufgaben getrennt sind.

### Beschreibung von Ausführungsbeispielen

Das in der Figur gezeigte Rechnersystem besteht im Wesentlichen aus zwei Prozessoren, die sich im Wesentlichen abgegrenzte Aufgabenbereiche teilen. Neben den abgegrenzten Aufgaben sind einzelne ausgewählte Aufgaben vorhanden, die dabei flexibel austauschbar sind, insbesondere Aufgaben, die eine hohe Rechenleistung erfordern. Die Abgrenzung erfolgt dabei nach den Eigenschaften der Funktionen, es wird zwischen fahrbezogenen (fahrbezogenen Funktionen) und nicht fahrbezogenen (unterhaltungsbezogene) Funktionen unterschieden.

Ein erster Prozessor 10 (ggf. zusammen mit einem Grafikprozessor) übernimmt fahrbezogene Funktionen bzw. Aufgaben wie beispielsweise die Anbindung an Fahrzeugbussysteme wie CAN, MOST, etc., eine Klimasteuerung, die Navigation, Fahrerwarnsysteme, die Auswertung und Darstellung einer zweidimensionalen Karte für die Navigation, die Sprachausgabe, das Mensch-Maschinen-Interface, etc. Mit anderen Worten realisiert dieses Teilsystem ein Fahrerinformationssystem inklusive Bedienoberfläche für Fahrzeugfunktionen. Auf der anderen Seite befindet sich ein Prozessor 12 (zusammen mit einem Grafikprozessor), der leistungsstark ist und beispielsweise in herkömmlichen Personalcomputern verwendet wird, der Aufgaben übernimmt, die nicht fahrbezogen sind, beispielsweise Spieleanwendungen, eine Internetanbindung, Videoanwendungen, generell Entertainmentsysteme (insbesondere für Passagiere), der eingerichtet ist für den Download von neuen Applikationen dieser Anwendungen, der die Busanbindung an Unterhaltungselektronik, wie beispielsweise PDA's, Laptops, etc. realisiert. Es wird also dadurch ein Unterhaltungs- und Informationssystem realisiert.

Die Funktionen dieses Rechnersystems setzen sich zusammen aus Funktionen der Consumer Elektronik (vorrangig Unterhaltungsfunktionen) und der fahrbezogenen Elektronik (vorrangig Fahrfunktionen, Fahrerinformationsfunktionen), die hier jeweils auf eigenen Rechnern des Systems realisiert werden. In einer Ausführung existiert ein Überlappungsbereich zwischen den Unterhaltungs- und Fahrfunktionen. Beispielsweise kann eine dreidimensionale Grafik (z.B. Karte für die Navigation als fahrbezogene Funktion) der Unterhaltung dienen und von dem anderen Prozessor (Entertaimnent) dargestellt werden. Ein anderes Beispiel ist die MP3-Funktionalität, die eigentlich in Verbindung mit Audioanwendungen zum Entertainmentteil gehört. Eine MP3-Decodierung ist jedoch auch Standardfunktion des Autoradios (fahrbezogener Teil), so dass diese Decodierung im Entertainmentprozessor oder in der fahrbezogenen Applikation übernommen werden kann. Beispielsweise ist die MP3-Dekodierung wichtig für die Sprachausgabe. Daher sind die beiden Prozessoren durch wenigstens eine Schnittstelle miteinander verbunden, so dass die Ausgangsdaten und / oder die Ergebnisse ausgewählter Aufgaben ausgelagert oder kurzzeitige rechenintensive Anwendungen, beispielsweise die Spracherkennung oder hochqualitative Sprachsyntheseprogramme vom fahrbezogenen Prozessor ausgelagert an den leistungsstärkeren Entertainmentprozessor übertragen werden kann oder umgekeht. Die dafür notwendige Funktionalität ist dann redundant in beiden Prozessoren vorhanden, so dass bei Ausfall oder Nichtvorhandensein des Entertainmentsystems der fahrbezogene Teil die Funktion ebenfalls realisieren kann.

Der fahrbezogene Teil des Rechnersystems ist dabei immer das Master-System, der Entertainmentprozessor der Slave.

Die Figur zeigt eine bevorzugte Ausführung des Rechnersystems. Das gezeigte Rechnersystem 100 zeigt den fahrbezogenen Teil 100a sowie einen nicht fahrbezogenen Teil 12. Der fahrbezogene Teil 100a besteht dabei aus einem Prozessor 10 sowie einem Grafikprozessor 11. Der Prozessor 10 umfasst dabei eine CPU, verschiedene Speicher (Mem) sowie eine Schnittstelle zur Anbindung an Fahrzeugbussysteme wie ATAPI, MOST, CAN oder an Sensoren oder Aktoren des Fahrzeugsystems (z.B. GYRO). Darüber hinaus weist der Prozessor eine Schnittstelle, z.B. SPI, zum Grafikprozessor 11 auf und eine weitere Schnittstelle zum nicht fahrbezogenen Teil, beispielsweise eine PCI-Schnittstelle. Der Grafikprozessor 11 besteht aus einem Rechnerkern mit Speicher und ist zum einen über eine Schnittstelle SPI mit dem Prozessor 10 verbunden, über eine weitere Schnittstelle, beispielsweise eine RGB-Schnittstelle, mit Anzeigemitteln für den Fahrer und über eine dritte Schnittstelle, beispielsweise eine LVDS-Schnittstelle, mit dem Grafikprozessor des nicht fahrbezogenen Teils 12.

Der nicht fahrbezogene Teil 12 umfasst einen Multimediaprozessor 13 mit hoher Rechenleistung und ferner einen Hochleistungsgrafikprozessor 14, der hochauflösende Grafiken, auch dreidimensionale Grafiken, verarbeiten kann. Der Prozessor 13 umfasst dabei eine Zentraleinheit (CPU) sowie verschiedene Speicher (Mem) und weist eine erste Schnittstelle zum Prozessor 10 des fahrbezogenen Teils auf (PCI), eine zweite Schnittstelle (ebenfalls PCI) zum Grafikprozessor 14 und eine weitere Schnittstelle zu Busschnittstellen wie beispielsweise USB, IEEE, etc. An diese Schnittstellen sind übliche Unterhaltungselektroniken oder Computer anschließbar. Der Grafikprozessor 14, der ebenfalls über Speicher verfügt, umfasst neben der Schnittstelle zum Prozessor 13 die oben erwähnte Schnittstelle LVDS zum Grafikprozessor des fahrbezogenen Teils des Rechnersystems sowie eine weitere Schnittstelle zur Anzeige der Grafiken an die Passagiere des Fahrzeugs. Diese Schnittstelle ist beispielsweise als RGB-Schnittstelle realisiert.

Die Aufteilung der fahrbezogenen und der nicht fahrbezogenen Funktionen, erfolgt nach ihrer Eigenschaft, wobei die im Wesentlichen fahrbezogenen Funktionen, die spezifische Information in Verbindung mit dem Bedienen, Navigieren, Führen des Fahrzeugs bzw. der Warnung und der Orientierung des Fahrers enthalten, im fahrbezogenen Teil realisiert werden, während vorrangig nicht fahrbezogene Funktionen, die für das Führen des Fahrzeugs unspezifische Informationen enthalten und zur Animation, Unterhaltung, Information vor allem der Fahrgäste dienen, im Entertainmentteil 12 des Rechnersystem realisiert sind. Bezüglich der fahrbezogenen Funktionen wird der Fokus auf die maximale Verfügbarkeit und Zuverlässigkeit der Funktionalitäten gelegt, da die Funktionen für die Fahrzeugführung wesentlich sind, sowie auf die interne Vernetzung mit den Fahrzeugbussen im Fahrzeug. Solche fahrzeugspezifischen Funktionen sind Navigationssysteme, HMI-Logik bzw. HMI-Manager, die die Anzeigen und die Bedienung im Fahrzeug steuern bzw. auswerten, Spracherkennungs- bzw. - Synthesesoftware, Programme zur Ausgabe von Fahranweisungen bzw. - Fahrerwarnungen sowie die Darstellung von zweidimensionalen Karten zur Orientierung. Es handelt sich also im weitesten Sinne um das fahrerbezogene HMI bzw. um ein Fahrerinformationssystem. Die nicht fahrbezogenen Funktionen umfassen Internetbrowser, Dienstedownload, die Darstellung von dreidimensionalen Grafiken, Anwendungen zur Unterhaltung von Passagieren, Spiele, Videowiedergabesystemen, digitaler Videobroadcastsysteme, das mobile Büro, tragbare Geräte wie Laptops, PDA's, etc., die an den Entertainmentteil anschließbar sind. Dabei wird beim Entertainmentteil des Rechnersystems der Fokus auf die Bereitstellung maximaler Leistung für die Funktionen und auf der Offenheit des Systems (z.B. Download von Software) sowie auf die externe Vernetzung (beispielsweise mit dem Internet) gelegt.

Die oben dargestellte Trennung weist in einer Ausführungsform Überlappungsbereiche auf. Beispielsweise werden über die LVDS-Schnittstelle grafikintensive Anwendungen, wie beispielsweise dreidimensionale Darstellungen wie einer dreidimensionalen Navigationskarte, oder dreidimensionale Modelle für Fahrzeugansichten etwa für die Klima- oder Klangeinstellungen, Animationen (Übergangsanimationen bei Maskenwechseln, animierte Elemente in Masken, animierte Bedienassistenten, etc.) oder Hintergrundbilder mit hohem Speicherbedarf, die in Verbindung mit Funktionen des fahrbezogenen Teils stehen, in Folge der notwendigen Rechenleistung im Entertainmentteil gerechnet, nicht im fahrbezogenen Teil, und über die LVDS-Schnittstelle ausgetauscht. Darüber hinaus werden kurzzeitige rechenintensive Anwendungen, beispielsweise die Spracherkennung mit natürlich-sprachlichem Ansatz und die dabei gegebenen erweiterten Erkennungsmöglichkeiten sowie die Sprachsynthese mit verbesserter Ausgabequalität beispielsweise über die PCI-Schnittstelle mit dem leistungsstarken Prozessor 13 des Entertainmentteils ausgetauscht und dort berechnet. Dabei ist anzumerken, dass der die genannten Funktionen redundant vorhanden sind und bei Ausfall des Entertainmentsystems oder bei dessen Nichtvorhandensein auch im fahrbezogenen Teil ausgeführt werden können. Alle anderen Funktionen sind nur einmal vorhanden.

Wesentlich ist also, dass in einem Rechnersystem die einzelnen Funktionen gemäß ihrer Bedeutung für die Fahrzeugführung aufgeteilt sind, wobei fahrbezogene Funktionen, das heißt Funktionen, die für das Führen des Fahrzeugs für den Fahrer wesentlich sind, in einem fahrbezogenen Prozessor berechnet werden, während nicht fahrbezogene Systeme, also z.B. Funktionen, die für das Führen des Fahrzeugs unwesentlich sind und eher der Unterhaltung, insbesondere der Passagiere dienen, in einem leistungsstarken Multimediarechner gerechnet werden, wobei vorzugsweise die beiden Rechner miteinander über Schnittstellen verbunden sind.

## Patentansprüche

1. Rechnersystem im Fahrzeug, welches wenigstens zwei Rechner (10, 13) aufweist, die unterschiedliche Aufgaben übernehmen, wobei die Aufteilung der Aufgaben auf die wenigstens zwei Rechner (10, 13) nach Bedeutung der Funktionen für das Führen des Fahrzeugs erfolgt, wobei im wesentlichen fahrbezogene Funktionen in einem ersten Rechner (10), nicht fahrbezogene Funktion in einem zweiten Rechner (13) realisiert sind, **dadurch gekennzeichnet, dass** beide Rechner (10, 13) mit jeweils einem Grafikprozessor (11, 14) verbunden sind, dass die beiden Rechner (10,13) samt Grafikprozessor (11, 14) unterschiedliche Leistungen haben, dass die beiden Rechner (10, 13) über eine vorgegebene erste Schnittstelle miteinander kommunizieren, dass der zweite Rechner (13) ein Multimediaprozessor mit hoher Rechenleistung ist, dass der dem zweiten Rechner (13) zugeordnete Grafikprozessor (14) ein Hochleistungsgrafikprozessor ist, der hochauflösende Grafik verarbeiten kann, dass der dem ersten Rechner (10) zugeordnete Grafikprozessor (11) über eine weitere zweite Schnittstelle mit Anzeigemitteln für den Fahrer, dass der dem zweiten Rechner (13) zugeordnete Grafikprozessor (14) über eine weitere dritte Schnittstelle mit Anzeigemitteln für die Passagiere verbunden ist und dass die beiden Grafikprozessoren (11, 14) über eine vierte Schnittstelle, über die grafikintensive Anwendungen ausgetauscht werden, miteinander verbunden sind.

2. Rechnersystem nach Anspruch 1, **dadurch gekennzeichnet, dass** die fahrbezogenen Funktionen fahrzeugspezifische Funktionen sind.

3. Rechnersystem nach einem der vorhergehenden Ansprüche, **dadurch gekennzeichnet, dass** die fahrbezogenen Funktionen spezifische Informationen in Verbindung mit dem Bedienen, Navigieren, Führen des Fahrzeugs bzw. mit der Warnung und der Orientierung des Fahrers enthalten, d.h. eine Mensch-Maschine-Schnittstelle und ein Fahrerinformationssystem bilden.

4. Rechnersystem nach einem der vorhergehenden Ansprüche, **dadurch gekennzeichnet, dass** die nicht fahrbezogenen Funktionen unterhaltungsspezifische Funktionen sind.

5. Rechnersystem nach einem der vorhergehenden Ansprüche, **dadurch gekennzeichnet, dass** die fahrbezogenen Funktionen wenigstens eine der folgende Funktionen umfassen: Navigationssysteme, Mensch-Maschine-Schnittstelle, die die Anzeigen und die Bedienung im Fahrzeug steuern bzw. auswerten, Spracherkennungs- bzw. -Synthesesoftware, Programme zur Ausgabe von Fahranweisungen bzw. -Fahrerwarnungen sowie die Darstellung von zweidimensionalen Karten zur Orientierung, während die nicht fahrbezogenen Funktionen wenigstens eine der folgende Funkionen umfassen: Intemetbrowser, Dienstedownload, die Darstellung von dreidimensionalen Grafiken, Anwendungen zur Unterhaltung von Passagieren, Spiele, Videowiedergabesystemen, digitaler Videobroadcastsysteme, die Anbindung anschließbarer tragbarer Geräte wie Laptops, PDA's.

6. Rechnersystem nach einem der vorhergehenden Ansprüche, **dadurch gekennzeichnet, dass** der ersten Rechner an interne Fahrzeugbusse angeschlossen ist.

7. Rechnersystem nach einem der vorhergehenden Ansprüche, **dadurch gekennzeichnet, dass** rechenintensive Funktionen des fahrbezogenen Teils im nicht fahrbezogenen Teil gerechnet werden.

8. Rechnersystem nach einem der vorhergehenden Ansprüche, **dadurch gekennzeichnet, dass** der fahrbezogene Rechner rechenintensive Aufgaben an den Rechner des nicht fahrbezogenen Teils abgibt, wobei der Rechner des fahrbezogenen Teils diese Ausgabe bei Nichtverfügbarkeit des anderen Rechners selbst durchführt.

## Claims

1. Computer system in a vehicle, which computer system has at least two computers (10, 13) which perform different tasks, wherein the apportionment of the tasks between the at least two computers (10, 13) is carried out in accordance with the functions for the control of the vehicle, wherein substantially driving-related functions are implemented in a first computer (10) and non-driving-related functions are implemented in a second computer (13), **characterized in that** the two computers (10, 13) are connected to one graphic processor (11, 14) each, and **in that** the two computers (10, 13) together with the graphic processor (11, 14) have different power levels, **in that** the two computers (10, 13) communicate with one another via a predefined first interface, **in that** the second computer (13) is a multimedia processor with a high computing power, **in that** the graphic processor (14) which is assigned to the second computer (13) is a high power graphic processor which can process high-resolution graphics, **in that** the graphic processor (11) which is assigned to the first computer (10) is connected via a further second interface to display means for the driver, **in that** the graphic processor (14) which is assigned to the second computer (13) is connected via a further third interface to display means for the passengers, and **in that** the two graphic processors (11, 14) are connected to one another via a fourth interface via which graphic-intensive applications are exchanged.

2. Computer system according to Claim 1, **characterized in that** the driving-related functions are vehicle-specific functions.

3. Computer system according to one of the preceding claims, **characterized in that** the driving-related functions contain specific information relating to the operator control, navigation, control of the vehicle and/or to the maintenance and the orientation of the driver, i.e. form a man/machine interface and a driver information system.

4. Computer system according to one of the preceding claims, **characterized in that** the non-driving-related functions are entertainment-specific functions.

5. Computer system according to one of the preceding claims, **characterized in that** the driving-related functions comprise at least one of the following functions: navigation systems, man/machine interface which control and/or evaluate the displays and the operator control means in the vehicle, voice recognition software and/or synthesis software, programs for outputting driver instructions and/or driver warnings and the display of two-dimensional maps for the purpose of orientation, while the non-driving-related functions comprise at least one of the following functions: Internet browser, services download, the display of three-dimensional graphics, applications for entertaining passengers, games, video playback systems, digital video broadcast systems, connection of connectable portable devices such as laptops, PDAs.

6. Computer system according to one of the preceding claims, **characterized in that** the first computer is connected to internal vehicle busses.

7. Computer system according to one of the preceding claims, **characterized in that** computing-intensive functions of the driving-related part are calculated in the non-driving-related part.

8. Computer system according to one of the preceding claims, **characterized in that** the driving-related computer outputs computing-intensive tasks to the computer of the non-driving-related part, wherein the computer of the driving-related part carries out this task when the other computer itself is not available.

## Revendications

1. Système informatique dans un véhicule, lequel présente au moins deux ordinateurs (10, 13) qui prennent en charge des tâches différentes, la distribution des tâches aux au moins deux ordinateurs (10, 13) s'effectuant d'après l'importance des fonctions pour la conduite du véhicule, les fonctions en rapport avec la conduite étant pour l'essentiel réalisées dans un premier ordinateur (10), les fonctions sans rapport avec la conduite dans un deuxième ordinateur (13), **caractérisé en ce que** les deux ordinateurs (10, 13) sont respectivement reliés avec un processeur graphique (11, 14), **en ce que** les deux ordinateurs (10, 13) avec leur processeur graphique (11, 14) ont des puissances différentes, **en ce que** les deux ordinateurs (10, 13) communiquent l'un avec l'autre par le biais d'une première interface prédéfinie, **en ce que** le deuxième ordinateur (13) est un processeur multimédia ayant une grande puissance de calcul, **en ce que** le processeur graphique (14) associé au deuxième ordinateur (13) est un processeur graphique de grande puissance qui peut traiter des graphiques à haute résolution, **en ce que** le processeur graphique (11) associé au premier ordinateur (10) est relié par le biais d'une deuxième interface supplémentaire avec des moyens d'indication pour le conducteur, **en ce que** le processeur graphique (14) associé au deuxième ordinateur (13) est relié par le biais d'une troisième interface supplémentaire avec des moyens d'indication pour les passagers et **en ce que** les deux processeurs graphiques (11, 14) sont reliés l'un avec l'autre par le biais d'une quatrième interface par le biais de laquelle sont échangées des applications nécessitant une puissance graphique importante.

2. Système informatique selon la revendication 1, **caractérisé en ce que** les fonctions en rapport avec la conduite sont des fonctions spécifiques au véhicule.

3. Système informatique selon l'une des revendications précédentes, **caractérisé en ce que** les fonctions en rapport avec la conduite contiennent des informations spécifiques en relation avec l'utilisation, la navigation, la conduite du véhicule ou avec l'alerte et l'orientation du conducteur, c'est-à-dire qu'elles forment une interface homme-machine et un système d'information du conducteur.

4. Système informatique selon l'une des revendications précédentes, **caractérisé en ce que** les fonctions en rapport avec la conduite sont des fonctions spécifiques au divertissement.

5. Système informatique selon l'une des revendications précédentes, **caractérisé en ce que** les fonctions en rapport avec la conduite comprennent au moins l'une des fonctions suivantes : systèmes de navigation, interface homme-machine, qui commandent ou interprètent les indications et l'utilisation dans le véhicule, logiciels de reconnaissance ou de synthèse vocale, programmes pour la diffusion d'instructions de conduite ou d'avertissements au conducteur ainsi que pour la représentation de cartes bidimensionnelles pour l'orientation, alors que les fonctions sans rapport avec la conduite comprennent au moins l'une des fonctions suivantes : navigateur Internet, téléchargement de services, représentation de graphiques tridimensionnels, applications pour le divertissement des passagers, jeux, systèmes de reproduction de vidéos, systèmes de vidéodiffusion numérique, connexion d'appareils portables pouvant être raccordés tels que des ordinateurs portables, des PDA.

6. Système informatique selon l'une des revendications précédentes, **caractérisé en ce que** le premier ordinateur est raccordé aux bus internes du véhicule.

7. Système informatique selon l'une des revendications précédentes, **caractérisé en ce que** les fonctions nécessitant une puissance de calcul importante de la partie en rapport avec la conduite sont calculées dans la partie sans rapport avec la conduite.

8. Système informatique selon l'une des revendications précédentes, **caractérisé en ce que** l'ordinateur en rapport avec la conduite confie les tâches nécessitant une puissance de calcul importante à l'ordinateur de la partie sans rapport avec la conduite, l'ordinateur de la partie en rapport avec la conduite effectuant cette tâche lui-même en cas d'indisponibilité de l'autre ordinateur.
